# FASCICULE DE BREVET EUROPEEN

(11) **EP 4 514 643 B1**
(45) Date de publication et mention de la délivrance du brevet: **03.06.2026**
(21) Numéro de dépôt: 23722356.5
(22) Date de dépôt: 26.04.2023
(51) Int. Cl.: B60K 35/20, B60K 37/10, B60K 37/20, B60R 13/02, B62D 25/14, F16B 5/06, F16B 5/12, F16B 2/22

(54) **ENSEMBLE D'HABILLAGE A PLANCHE DE BORD AVEC INTERFACE DE MAINTENANCE A LEVIER DE DEVERROUILLAGE**
ARMATURENBRETTVERKLEIDUNGSANORDNUNG MIT WARTUNGSSCHNITTSTELLE MIT ENTRIEGELUNGSHEBEL
DASHBOARD TRIM ASSEMBLY HAVING A MAINTENANCE INTERFACE WITH AN UNLOCKING LEVER

(30) Priorité: 28.04.2022 FR 2203977
(43) Date de publication de la demande: 05.03.2025
(73) Titulaire: Faurecia Intérieur Industrie, 92000 Nanterre (FR)
(72) Inventeur: DOSSOU, Patrick, 75015 PARIS (FR); LEGRAND, Pierre, 60240 CHAUMONT EN VEXIN (FR); FABRIS, Stephane, 95260 MOURS (FR); TORRECILLAS, Jean-Louis, 60000 BEAUVAIS (FR)
(74) Mandataire: Novagraaf Group
(86) Numéro de dépôt international: PCT/EP2023/061000
(87) Numéro de publication internationale: WO 2023/209031

(56) Documents cités:
- JP-A- 2018 123 922
- US-A1- 2007 050 955
- US-A1- 2008 028 577
- US-A1- 2009 049 660

## Description

### Domaine technique

La présente invention concerne un ensemble d'habillage pour véhicule, comprenant une planche de bord ayant une bordure transversale postérieure, la bordure étant prévue pour être agencée à proximité du pare-brise du véhicule lorsque l'ensemble d'habillage est monté dans celui-ci, et au moins une pièce d'assemblage en prise avec la planche de bord pour fixer la planche de bord sur la caisse du véhicule, chaque pièce d'assemblage comportant un dispositif de verrouillage de la pièce d'assemblage sur la planche de bord (102), le dispositif de verrouillage étant mobile entre une première position verrouillée, dans laquelle la pièce d'assemblage est immobilisée sur la planche de bord (102), et une seconde position déverrouillée, dans laquelle la pièce d'assemblage peut être retirée de la planche de bord.

### Technique antérieure

Un tel ensemble d'habillage est connu du document FR 3 101 056 A1. En référence à la figure 1 de ce document, cet ensemble d'habillage connu comprend une planche de bord 12 et une pièce d'assemblage 10. La pièce d'assemblage 10 est verrouillée sur la planche de bord 12 grâce à un crochet flexible 16B.

Dans un véhicule automobile 50 équipé d'un tel ensemble d'habillage 10, 12, un garagiste peut vouloir détacher la planche de bord 12 de la caisse 14 du véhicule 50, par exemple pour effectuer une réparation. L'ensemble d'habillage 10, 12 est muni d'une ouverture d'accès permettant au garagiste de réaliser cette opération. Cette ouverture d'accès est constituée d'un trou 12B pratiqué dans la planche de bord 12 et situé au-dessus du crochet flexible 16B. Afin de détacher la planche de bord 12 de la caisse 14, le garagiste fait passer un outil fin et long à travers le trou 12B pour venir appuyer sur le crochet 16B. De cette façon, la pièce d'assemblage 10, et ainsi la caisse 14, sont déverrouillées de la planche de bord 12.

Un inconvénient de cette solution de déverrouillage connue est le fait qu'elle contraint le constructeur de planche de bord à réserver une zone précise à l'avant de la planche de bord 12 au trou d'accès 12B. En effet, le trou d'accès 12B ne peut être placé n'importe où puisqu'il doit permettre un accès facile au crochet 16B. Or, cette zone précise ne se prête pas toujours à un trou d'accès. En outre, cette zone ne peut alors que difficilement servir à d'autres fonctions. Le document FR 3 101 056 A1 propose d'intégrer le trou d'accès 12B dans une grille de désembuage. Toutefois, la grille de désembuage doit alors nécessairement être placée au-dessus du crochet 16B, même si cette position ne permet pas un désembuage efficace du pare-brise du véhicule. En outre, dans cette solution connue, le trou d'accès 12B se trouve dans une zone visible de la planche de bord 12, ce qui peut impacter l'aspect esthétique de ladite planche de bord 12.

### Résumé

Un but de la présente invention est donc de proposer un ensemble d'habillage dans lequel l'ouverture d'accès pour le détachement de la planche de bord se trouve à un endroit plus adapté de la planche de bord.

Selon la présente invention, ce but est atteint avec un ensemble d'habillage tel que défini au § [0001], qui est caractérisé en ce que l'ensemble d'habillage comprend en outre, pour chaque pièce d'assemblage, un levier d'actionnement du dispositif de verrouillage de la pièce d'assemblage, le levier d'actionnement permettant de passer le dispositif de verrouillage de sa première à sa seconde position, et une ouverture d'accès au levier d'actionnement associé à la pièce d'assemblage, l'ouverture d'accès étant située sur la bordure de la planche de bord.

En effet, en prévoyant un levier d'actionnement, l'ouverture d'accès peut être déportée vers la bordure postérieure de la planche de bord, c'est-à-dire à un endroit peu gênant et peu visible de la planche de bord. En même temps, l'ouverture d'accès reste facilement accessible par un technicien.

Par postérieure, on entend une partie de la planche de bord opposée à la partie comprenant les zones d'interactions de l'utilisateur (volant, compteur, écran...). La partie postérieure correspond à une partie proche de la zone pare-brise du véhicule.

Le levier d'actionnement selon la présente invention agit comme un relais qui permet de transmettre la force d'appui exercée par le technicien avec son outil au dispositif de verrouillage de la pièce d'assemblage.

Les caractéristiques exposées dans les paragraphes suivants peuvent, optionnellement, être mises en oeuvre, indépendamment les unes des autres ou en combinaison les unes avec les autres :
- chaque levier d'actionnement est agencé sur la planche de bord ;
- la planche de bord comprend un corps principal et une coiffe montée sur le corps principal, chaque levier d'actionnement étant agencé sur le corps principal ;
- chaque levier d'actionnement est venu de matière avec le corps principal ;
- chaque levier d'actionnement est relié à la planche de bord par une articulation permettant de pivoter le levier d'actionnement par rapport à la planche de bord ;
- chaque levier d'actionnement comprend une zone d'actionnement permettant d'exercer une pression sur le dispositif de verrouillage associé au levier d'actionnement afin de mettre le dispositif de verrouillage dans sa position déverrouillée ;
- chaque zone d'actionnement est constituée d'une saillie à proximité du dispositif de verrouillage associé ;
- chaque zone d'actionnement est constituée d'un méplat à proximité du dispositif de verrouillage associé ;
- chaque levier d'actionnement est agencé sur sa pièce d'assemblage associée ;
- chaque levier d'actionnement est relié par l'une de ses extrémités au dispositif de verrouillage de sa pièce d'assemblage associée, pour pouvoir ainsi agir en traction sur le dispositif de verrouillage associé ;
- chaque levier d'actionnement a une zone d'appui située au niveau de l'ouverture d'accès associée au levier d'actionnement, chaque levier d'actionnement étant manoeuvré en exerçant une pression sur sa zone d'appui ;
- chaque levier d'actionnement comprend une section d'accueil d'un joint de pare-brise ;
- chaque levier d'actionnement comprend une arête de protection à proximité de sa section d'accueil pour protéger un joint de pare-brise accueilli dans sa section d'accueil ;
- chaque dispositif de verrouillage est un crochet flexible.

La présente invention concerne également un véhicule automobile comprenant une caisse et un ensemble d'habillage tel que défini ci-dessus, l'ensemble d'habillage étant fixé sur la caisse à l'aide de ses pièces d'assemblage.

En outre, la présente invention concerne une pièce d'assemblage pour connecter une planche de bord à une caisse d'un véhicule, la pièce d'assemblage comportant un dispositif de verrouillage de la pièce d'assemblage sur une planche de bord, le dispositif de verrouillage étant mobile entre une première position verrouillée et une seconde position déverrouillée, caractérisée en ce qu'elle comprend un levier d'actionnement du dispositif de verrouillage, le levier d'actionnement permettant de passer le dispositif de verrouillage de sa première à sa seconde position.

De préférence, la pièce d'assemblage selon la présente invention comprend une, plusieurs ou toutes les caractéristiques suivantes :
- le levier d'actionnement est relié par l'une de ses extrémités au dispositif de verrouillage, pour pouvoir ainsi agir en traction sur le dispositif de verrouillage ;
- le dispositif de verrouillage est un crochet flexible ;
- le passage du dispositif de verrouillage de la première à la seconde position se fait par déformation d'au moins une portion du dispositif de verrouillage ;
- des moyens de maintien du dispositif de verrouillage dans la seconde position ;
- les moyens de maintien dans la seconde position comprennent une patte de maintien montée sur la pièce d'assemblage et une dépression complémentaire à la patte de maintien, la patte de maintien coopérant avec la dépression pour maintenir le levier d'actionnement dans une position active, une lumière étant pratiquée dans le levier d'actionnement et accueillant la patte de maintien au moins dans la seconde position.

### Brève description des dessins

D'autres caractéristiques, détails et avantages apparaîtront à la lecture de la description détaillée ci-après, et à l'analyse des dessins annexés, sur lesquels :
**Fig. 1**

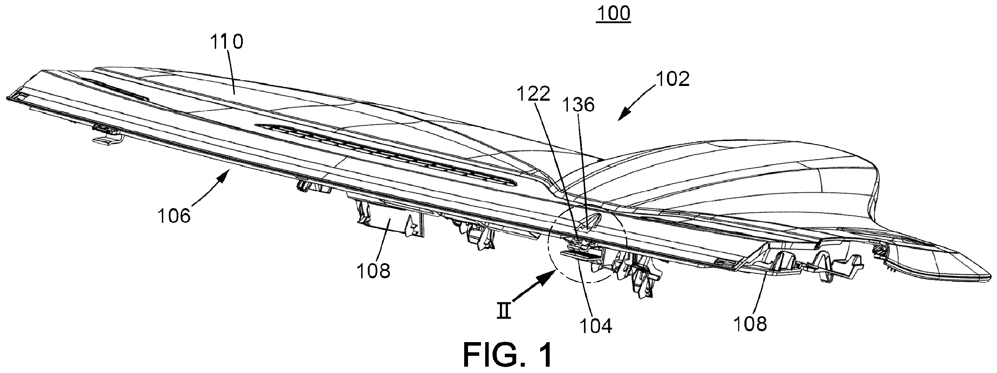

   [Fig. 1] montre un ensemble d'habillage pour véhicule automobile en perspective selon un premier mode de réalisation de la présente invention.
**Fig. 2**

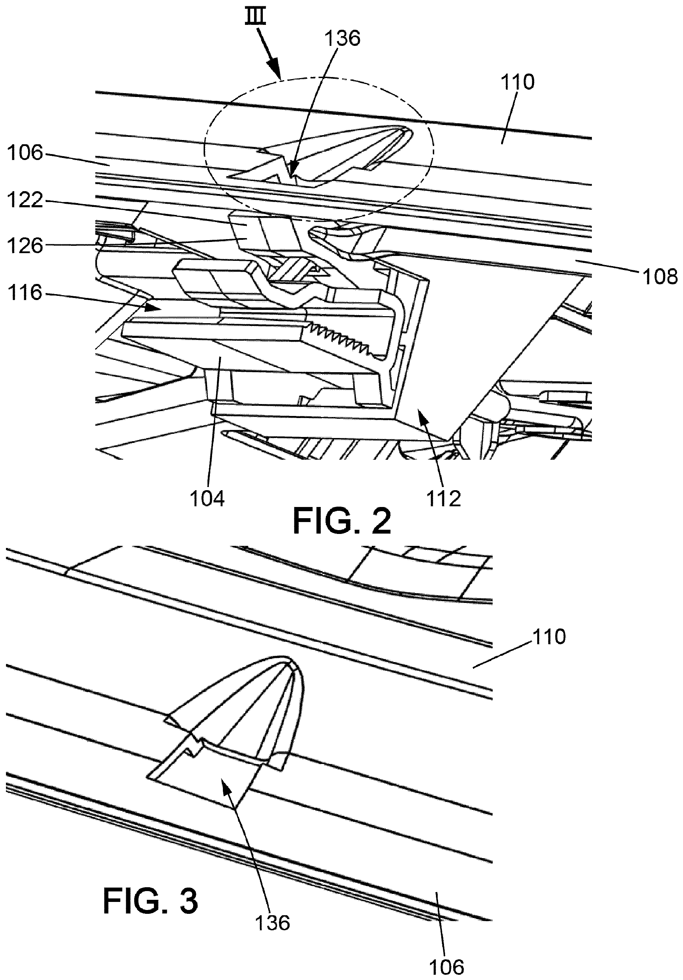

   [Fig. 2] est une vue de détail en perspective de la zone II de la figure 1.
**Fig. 3**
   [Fig. 3] est une vue de détail en perspective de la zone III de la figure 2.
**Fig. 4**

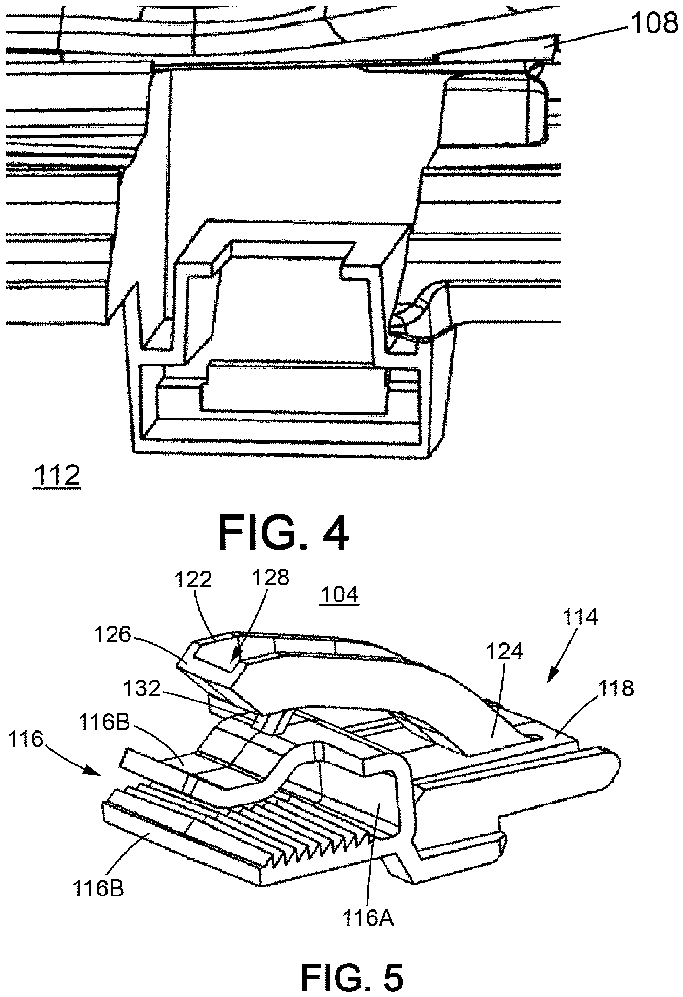

   [Fig. 4] est une vue de détail en perspective de la zone d'accueil de la pièce d'assemblage selon le premier mode de réalisation.
**Fig. 5**
   [Fig. 5] est une vue isolée en perspective de la pièce d'assemblage du premier mode de réalisation.
**Fig. 6**

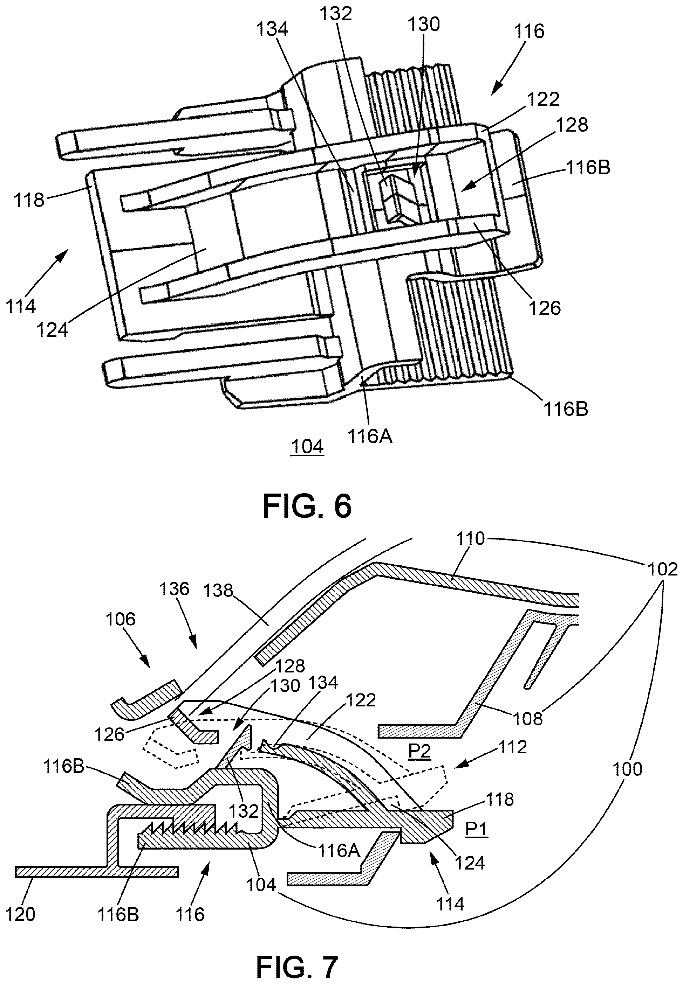

   [Fig. 6] est une deuxième vue en perspective de la pièce d'assemblage du premier mode de réalisation.
**Fig. 7**
   [Fig. 7] est une vue en coupe illustrant le fonctionnement du premier mode de réalisation avec les positions verrouillée et déverrouillée du dispositif de verrouillage d'une pièce d'assemblage.
**Fig. 8**

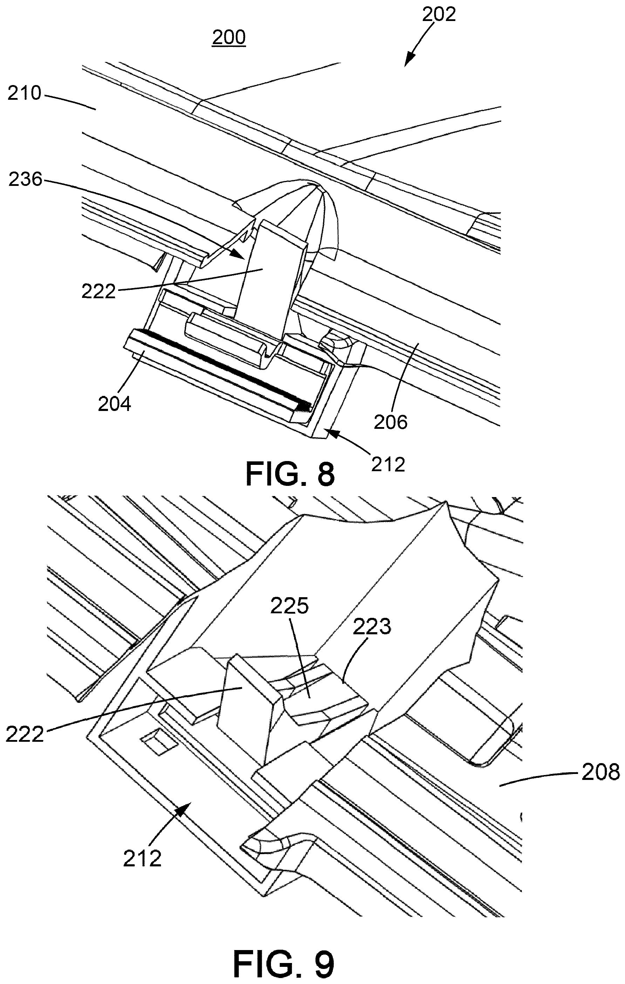

   [Fig. 8] est une vue en perspective comparable à celle de la figure 2 d'un ensemble d'habillage selon un deuxième mode de réalisation de la présente divulgation.
**Fig. 9**
   [Fig. 9] est une vue en perspective du deuxième de mode réalisation illustrant le levier d'actionnement et la zone d'accueil de la pièce assemblage.
**Fig. 10**

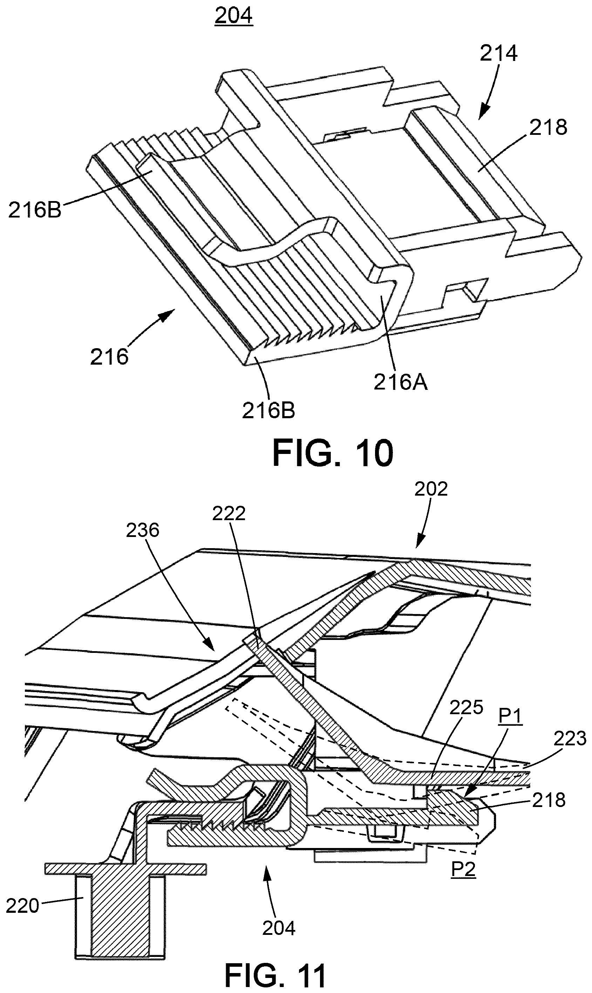

   [Fig. 10] est une vue isolée en perspective de la pièce d'assemblage selon le deuxième de réalisation.
**Fig. 11**
   [Fig. 11] est une illustration en coupe du fonctionnement du deuxième mode de réalisation avec les positions verrouillé et déverrouillé du dispositif de verrouillage d'une pièce d'assemblage.
**Fig. 12**

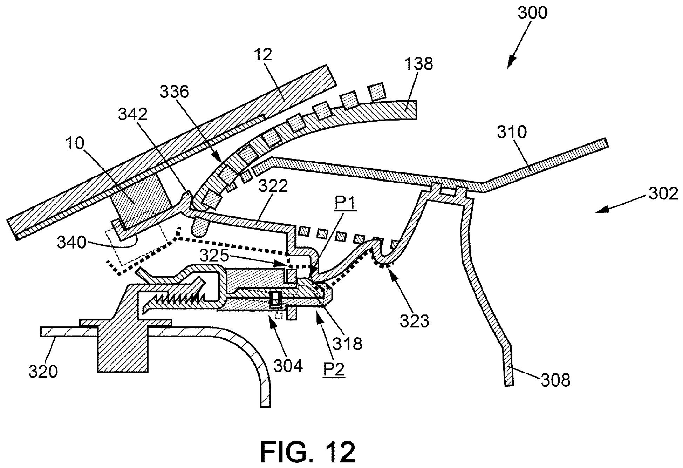

   [Fig. 12] est une vue en coupe d'un ensemble d'habillage selon un troisième mode de réalisation de la présente invention

### Description des modes de réalisation

En référence aux figures 1 à 7, on va maintenant décrire un ensemble d'habillage pour véhicule automobile selon un premier mode de réalisation de la présente divulgation.

Cet ensemble d'habillage 100 comprend une planche de bord 102 et une ou plusieurs pièces d'assemblage 104. À la figure 1, une seule pièce d'assemblage 104 est représentée. Toutefois, de préférence, plusieurs pièces d'assemblage 104 sont prévues le long de la planche de bord 102. Par la suite, on s'intéressera uniquement à la pièce d'assemblage 104 représentée, mais, bien entendu, tout ce qui est dit en relation avec cette pièce d'assemblage 104 s'applique intégralement aux éventuelles autres pièces d'assemblage non représentées de l'ensemble d'habillage 100.

La planche de bord 102 à une bordure transversale postérieure 106. Lorsque l'ensemble d'habillage 100 est monté dans un véhicule automobile, la bordure 106 est agencée à proximité du pare-brise du véhicule automobile.

La planche de bord 102 comprend un corps principal 108 et une coiffe 110, montée sur le corps principal 108.

Dans un mode de réalisation non représenté, la coiffe 110 et le corps principal 108 sont réalisés d'un seul tenant, par exemple par injection de matière plastique.

La pièce d'assemblage 104 est en prise avec la planche de bord 102. La pièce d'assemblage 104 permet de fixer la planche de bord 102 sur la caisse d'un véhicule automobile. Comme mieux visible à la figure 2, la pièce d'assemblage 104 est reçue dans une zone d'accueil 112 du corps principal 108 de la planche de bord 102. La zone d'accueil 112 est montrée séparément à la figure 4, et la pièce d'assemblage 104 est montrée séparément aux figures 5 et 6.

La pièce d'assemblage 104 comprend une partie mâle 114 et une partie femelle 116. La pièce d'assemblage 104 est clipsée dans la zone d'accueil 112 du corps principal 108 de la planche de bord 102 à l'aide de sa partie mâle 114. La partie mâle 114 est alors reçue dans la zone d'accueil 112. À cette fin, la partie mâle 114 comporte un dispositif de verrouillage 118. Ici, ce dispositif de verrouillage se présente sous la forme d'un crochet flexible 118.

La partie femelle 116 de la pièce d'assemblage 104 a de préférence la forme d'un U. Elle comprend une base 116A et deux branches 116B perpendiculaires à la base 116A. La partie femelle 116 permet de fixer l'ensemble d'habillage 100 sur la caisse 120 d'un véhicule automobile, cf. la figure 7.

Selon la présente divulgation, un levier d'actionnement 122 est agencé sur la pièce d'assemblage 104. Le levier d'actionnement 122 est relié par l'une 124 de ses extrémités au dispositif de verrouillage, c'est-à-dire au crochet flexible 118. Ainsi, le levier d'actionnement 122 peut agir en traction sur le crochet flexible 118.

L'autre extrémité libre 126 du levier d'actionnement 122 a une zone d'appui 128. Le levier d'actionnement 122 est manœuvré en exerçant une pression sur sa zone d'appui 128.

Une lumière 130 est pratiquée dans le levier d'actionnement 122. Cette lumière 130 accueille une patte de maintien 132. La patte de maintien 132 est montée sur la partie femelle 116 de la pièce d'assemblage 104. Plus précisément, la patte de maintien 132 se situe sur l'une des branches 116B de la partie femelle 116.

Une dépression 134 complémentaire à la patte de maintien 132 est réalisée sur le levier d'actionnement 122 à proximité de la lumière 130. La patte de maintien 132 peut coopérer avec la dépression 134 pour maintenir le levier d'actionnement 122 dans une position active, c'est-à-dire une position de déverrouillage de la pièce d'assemblage 104 de la planche de bord 102.

En référence aux figures 1, 2 et 7, le levier d'actionnement 122 est situé sous la coiffe 110 du tableau de bord 102. Plus précisément, l'extrémité libre 126 du levier d'actionnement 122 est située en dessous de la bordure 106 de la coiffe 110. L'extrémité libre 126 et donc la zone d'appui 128 du levier d'actionnement 122 sont accessibles de l'extérieur grâce à une ouverture d'accès 136. L'ouverture d'accès 136 est située sur la bordure 106 de la planche de bord 102.

En référence à la figure 7, on va maintenant décrire le procédé de déverrouillage de la pièce d'assemblage 104 qui permet à un garagiste de détacher la planche de bord 102 de la caisse 120 du véhicule automobile.

Afin de détacher la planche de bord 102 de la caisse 120, le garagiste fait passer un outil 138 fin et long à travers l'ouverture d'accès 136 pour venir appuyer sur la zone d'appui 128 du levier d'actionnement 122. De cette façon, le levier d'actionnement 122 est forcé vers le bas pour atteindre une position active montrée en pointillés à la figure 7. Lors de ce déplacement du levier d'actionnement 122, la patte de maintien 132 vient se loger dans la dépression 134. Ainsi, le levier d'actionnement 122 est maintenu dans sa position active. Le garagiste peut alors retirer l'outil 138.

Puisque le crochet flexible 118 est attaché à l'extrémité inférieure 124 du levier d'actionnement 122, il suit le mouvement de ce dernier. Aussi, le crochet 118 est soulevé (cf. les pointillés à la figure 7) et dégagé de la zone d'accueil 112 du corps principal 108.

En appuyant sur le levier d'actionnement 122, on peut donc déplacer le crochet flexible 118 d'une première position verrouillée P1, montrée en traits pleins à la figure 7, dans laquelle la pièce d'assemblage 104 est immobilisée sur la planche de bord 102, vers une seconde position déverrouillée P2, montrée en pointillés à la figure 7, dans laquelle la pièce d'assemblage 104 peut être retirée de la planche de bord 102.

En d'autres termes, le levier d'actionnement 122 permet de passer le crochet flexible 118 de sa position verrouillée P1 à sa position déverrouillée P2.

Une fois que le crochet flexible 118 de la pièce d'assemblage 104 est arrêté dans sa position déverrouillée P2, le garagiste peut alors retirer la planche de bord 102 de la caisse 120. Ceci a pour effet de séparer la pièce d'assemblage 104 de la planche de bord 102. La pièce d'assemblage 104 n'est alors plus en prise avec la planche de bord 102, tout en restant en prise avec la caisse 120.

En référence aux figures 8 à 11, on va maintenant décrire un ensemble d'habillage 200 selon un deuxième mode de réalisation de la présente divulgation. On insistera uniquement sur les différences par rapport au premier mode de réalisation. Pour les éléments similaires, il est fait référence à la description ci-dessus du premier mode de réalisation.

Le deuxième mode de réalisation 200 est différent du premier mode de réalisation 100 notamment en ce que le levier d'actionnement 222 n'est pas agencé sur la pièce d'assemblage 204, mais plutôt sur la planche de bord 202. Plus précisément, et en référence à la figure 9, le levier d'actionnement 222 est agencé sur le corps principal 208 de la planche de bord 202. De préférence, le levier d'actionnement 222 est venu de matière avec le corps principal 208.En variante, le levier d'actionnement 222 est venu de matière avec la coiffe 210.

Le levier d'actionnement 222 est relié au corps principal 208 par une articulation 223. Cette articulation 223 permet de pivoter le levier d'actionnement 222 par rapport au corps principal 208.

En variante, le levier d'actionnement 222 est relié au corps principal 208 par charnière film et/ou une zone plus souple. Cette liaison permet de pivoter le levier d'actionnement 222 par rapport au corps principal 208, par déformation élastique du levier d'actionnement 222.

À proximité de l'articulation 223, le levier d'actionnement 222 comprend une zone d'actionnement 225. La zone d'actionnement 225 permet d'exercer une pression sur le crochet flexible 218 de la pièce d'assemblage 204. Cela permet de déplacer le crochet flexible 218 vers sa position déverrouillée P2.

Dans ce deuxième mode de réalisation, la zone d'actionnement est constituée d'un méplat 225 qui est situé à proximité et au-dessus du crochet flexible 218 de la pièce d'assemblage 204.

La figure 11 illustre le procédé de déverrouillage de la pièce d'assemblage 204 du deuxième mode de réalisation 200.

Afin de détacher la planche de bord 202 de la caisse 220, il suffit de faire passer un outil fin et long à travers l'ouverture d'accès 236 pour venir appuyer sur le levier d'actionnement 222. Ainsi, le levier d'actionnement 222 est pivoté vers le bas et atteint sa position active montrée en pointillés à la figure 11. Lors de ce pivotement, le méplat 225 du levier d'actionnement 222 appuie sur le crochet flexible 218 de la pièce d'assemblage 204. Aussi, le crochet flexible 218 est forcé vers le bas et atteint sa position déverrouillée P2, indiquée en pointillés. La planche de bord 202 peut alors être retirée de la caisse 220.

En référence aux figures 6, 7 et 10, 11, on notera que, dans le deuxième mode de réalisation, l'orientation du crochet flexible 218 de la pièce d'assemblage 204 est inversée comparé à l'orientation du crochet flexible 118 de la pièce d'assemblage 104 du premier mode de réalisation. Dans le deuxième mode de réalisation, le crochet 218 est tourné vers le levier d'actionnement 222, tandis que, dans le premier mode réalisation, Le crochet flexible 118 tourne le dos au levier d'actionnement 122.

En référence à la figure 12, on va maintenant décrire un ensemble d'habillage 300 selon un troisième mode de réalisation de la présente divulgation.

Ce troisième mode de réalisation est une variante du deuxième mode de réalisation, et on insistera ici uniquement sur les différences par rapport au deuxième mode de réalisation. Pour les éléments comparables, il est fait référence à la description ci-dessus du deuxième mode de réalisation.

Dans ce troisième mode de réalisation, la zone d'actionnement du levier d'actionnement 322 est constituée d'une saillie 325 située à proximité et au-dessus du crochet flexible 318 de la pièce d'assemblage 304.

En outre, dans ce mode de réalisation, le levier d'actionnement 322 comprend une section d'accueil 340. Cette section d'accueil 340 se situe de préférence au niveau de l'extrémité libre du levier d'actionnement 322. La section d'accueil 340 sert à porter une portion de joint de pare-brise 10. À l'état monté de l'ensemble d'habillage 300, la section d'accueil 340 est positionnée de façon que le joint de pare-brise 10 qui y est fixé se situe entre le pare-brise 12 du véhicule automobile et la planche de bord 302. On assure ainsi l'étanchéité entre le pare-brise 12 et la planche de bord 302.

Le levier d'actionnement 322 peut comprendre une arête de protection 342 en bordure de sa section d'accueil 340. Cette arête de protection 342 protège le joint de pare-brise 10 de la pointe d'un outil 138 inséré dans l'ouverture d'accès 336.

Pour conclure, on aura noté que l'ensemble d'habillage selon la présente divulgation est caractérisé par un jeu d'ouvertures d'accès et un jeu de leviers d'actionnement associés qui constituent ensemble une interface de détachement de la planche de bord particulièrement avantageuse. En effet, cette interface n'est pratiquement pas visible par les passagers du véhicule automobile, puisque les ouvertures d'accès se situent à l'arrière de la planche de bord à proximité du pare-brise. L'interface est donc délocalisée dans une zone périphérique et invisible de la planche de bord, ce qui enlève une contrainte lors de la conception des zones visibles de la planche de bord.

Dans un mode de réalisation non représenté, la planche de bord 102 est réalisé par injection.

## Revendications

1. Ensemble d'habillage (100) pour véhicule, comprenant :
a. une planche de bord (102) ayant une bordure transversale postérieure (106), la bordure (106) étant prévue pour être agencée à proximité du pare-brise (12) du véhicule lorsque l'ensemble d'habillage (100) est monté dans celui-ci ; et
b. au moins une pièce d'assemblage (104) en prise avec la planche de bord (102) pour fixer la planche de bord (102) sur la caisse (120) du véhicule, chaque pièce d'assemblage (104) comportant un dispositif (118) de verrouillage de la pièce d'assemblage (104) sur la planche de bord (102), le dispositif de verrouillage (118) étant mobile entre :
i. une première position verrouillée (P1), dans laquelle la pièce d'assemblage (104) est immobilisée sur la planche de bord (102), et
ii. une seconde position déverrouillée (P2), dans laquelle la pièce d'assemblage (104) peut être retirée de la planche de bord (102),
**caractérisé en ce que** l'ensemble d'habillage (100) comprend en outre, pour chaque pièce d'assemblage (104) :
a. un levier (122) d'actionnement du dispositif de verrouillage (118) de la pièce d'assemblage (104), le levier d'actionnement (122) permettant de passer le dispositif de verrouillage (118) de sa première à sa seconde position ; et
b. une ouverture (136) d'accès au levier d'actionnement (122) associé à la pièce d'assemblage (104), l'ouverture d'accès (136) étant située sur la bordure (106) de la planche de bord (102).

2. Ensemble d'habillage (200) selon la revendication précédente, dans lequel chaque levier d'actionnement (222) est agencé sur la planche de bord (202).

3. Ensemble d'habillage (200) selon la revendication 2, dans lequel chaque levier d'actionnement (222) est relié à la planche de bord (202) par une articulation (223) permettant de pivoter le levier d'actionnement (222) par rapport à la planche de bord (202).

4. Ensemble d'habillage (200) selon l'une quelconque des revendications 2 à 3, dans lequel chaque levier d'actionnement (222) comprend une zone d'actionnement (225) permettant d'exercer une pression sur le dispositif de verrouillage (218) associé au levier d'actionnement (222) afin de mettre le dispositif de verrouillage (218) dans sa position déverrouillée (P2).

5. Ensemble d'habillage (100) selon la revendication 1, dans lequel chaque levier d'actionnement (122) est agencé sur sa pièce d'assemblage (104) associée.

6. Ensemble d'habillage (100) selon la revendication 5, dans lequel chaque levier d'actionnement (122) est relié par l'une (124) de ses extrémités au dispositif de verrouillage (118) de sa pièce d'assemblage (104) associée, pour pouvoir ainsi agir en traction sur le dispositif de verrouillage (118) associé.

7. Ensemble d'habillage (100) selon l'une quelconque des revendications précédentes, dans lequel chaque levier d'actionnement (122) a une zone d'appui (128) située au niveau de l'ouverture d'accès (136) associée au levier d'actionnement (122), chaque levier d'actionnement (122) étant manoeuvré en exerçant une pression sur sa zone d'appui (128).

8. Ensemble d'habillage (300) selon l'une quelconque des revendications précédentes, dans lequel chaque levier d'actionnement (322) comprend une section (340) d'accueil d'un joint de pare-brise (10).

9. Ensemble d'habillage (100) selon l'une quelconque des revendications précédentes, dans lequel chaque dispositif de verrouillage est un crochet flexible (118).

10. Pièce d'assemblage (104) pour connecter une planche de bord (102) à une caisse (120) d'un véhicule, la pièce d'assemblage (104) comportant un dispositif (118) de verrouillage de la pièce d'assemblage (104) sur une planche de bord (102), le dispositif de verrouillage (118) étant mobile entre une première position verrouillée (P1) et une seconde position déverrouillée (P2), **caractérisée en ce qu'**elle comprend un levier (122) d'actionnement du dispositif de verrouillage (118), le levier d'actionnement (122) permettant de passer le dispositif de verrouillage (118) de sa première à sa seconde position.

11. Pièce d'assemblage (104) selon la revendication précédente, dans laquelle le levier d'actionnement (122) est relié par l'une (124) de ses extrémités au dispositif de verrouillage (118), pour pouvoir ainsi agir en traction sur le dispositif de verrouillage (118).

12. Pièce d'assemblage (104) selon l'une quelconque des revendications 10 ou 11, dans laquelle le dispositif de verrouillage est un crochet flexible (118).

13. Pièce d'assemblage (104) selon l'une quelconque des revendications 10 à 12, dans laquelle le passage du dispositif de verrouillage (118) de la première à la seconde position se fait par déformation d'au moins une portion du dispositif de verrouillage (118).

14. Pièce d'assemblage (104) selon l'une quelconque des revendications 10 à 13, comprenant des moyens de maintien du dispositif de verrouillage (118) dans la seconde position (P2).

15. Pièce d'assemblage (104) selon la revendication précédente, dans laquelle les moyens de maintien dans la seconde position (P2) comprennent une patte de maintien (132) montée sur la pièce d'assemblage et une dépression (134) complémentaire à la patte de maintien (132), la patte de maintien (132) coopérant avec la dépression (134) pour maintenir le levier d'actionnement (122) dans une position active, une lumière (130) étant pratiquée dans le levier d'actionnement et accueillant la patte de maintien (132) au moins dans la seconde position (P2).

## Patentansprüche

1. Verkleidungsanordnung (100) für ein Fahrzeug, umfassend:
a. ein Armaturenbrett (102) mit einer hinteren Querkante (106), wobei die Kante (106) dafür vorgesehen ist, nahe der Windschutzscheibe (12) des Fahrzeugs angeordnet zu werden, wenn die Verkleidungsanordnung (100) darin montiert wird; und
b. mindestens ein Montageteil (104) in Eingriff mit dem Armaturenbrett (102) zum Sichern des Armaturenbretts (102) an der Karosserie (120) des Fahrzeugs, wobei jedes Montageteil (104) eine Vorrichtung (118) zum Verriegeln des Montageteils (104) an dem Armaturenbrett (102) umfasst, wobei die Verriegelungsvorrichtung (118) bewegbar ist zwischen:
i. einer ersten, verriegelten Position (P1), in der das Montageteil (104) auf dem Armaturenbrett (102) immobilisiert ist, und
ii. einer zweiten, entriegelten Position (P2), in der das Montageteil (104) von dem Armaturenbrett (102) entfernt werden kann,
**dadurch gekennzeichnet, dass** die Verkleidungsanordnung (100) ferner für jedes Montageteil (104) umfasst:
a. einen Hebel (122) zum Betätigen der Vorrichtung (118) zum Verriegeln des Montageteils (104), wobei der Betätigungshebel (122) es ermöglicht, die Verriegelungsvorrichtung (118) von ihrer ersten in ihre zweite Position zu bewegen; und
b. eine Öffnung (136) zum Zugreifen auf den Betätigungshebel (122), der dem Montageteil (104) zugeordnet ist, wobei sich die Zugangsöffnung (136) an der Kante (106) des Armaturenbretts (102) befindet.

2. Verkleidungsanordnung (200) nach dem vorstehenden Anspruch, wobei jeder Betätigungshebel (222) an dem Armaturenbrett (202) angeordnet ist.

3. Verkleidungsanordnung (200) nach Anspruch 2, wobei jeder Betätigungshebel (222) durch ein Gelenk (223), das es ermöglicht, den Betätigungshebel (222) relativ zu dem Armaturenbrett (202) zu schwenken, mit dem Armaturenbrett (202) verbunden ist.

4. Verkleidungsanordnung (200) nach einem der Ansprüche 2 bis 3, wobei jeder Betätigungshebel (222) eine Betätigungszone (225) umfasst, die es ermöglicht, Druck auf die mit dem Betätigungshebel (222) verbundene Verriegelungsvorrichtung (218) auszuüben, um die Verriegelungsvorrichtung (218) in ihre entriegelte Position (P2) zu bringen.

5. Verkleidungsanordnung (100) nach Anspruch 1, wobei jeder Betätigungshebel (122) an seinem zugehörigen Montageteil (104) angeordnet ist.

6. Verkleidungsanordnung (100) nach Anspruch 5, wobei jeder Betätigungshebel (122) durch eines seiner Enden (124) mit der Vorrichtung (118) zum Verriegeln seines zugehörigen Montageteils (104) verbunden ist, um an der zugehörigen Verriegelungsvorrichtung (118) ziehen zu können.

7. Verkleidungsanordnung (100) nach einem der vorstehenden Ansprüche, wobei jeder Betätigungshebel (122) eine Lagerzone (128) aufweist, die an der dem Betätigungshebel (122) zugeordneten Zugangsöffnung (136) angeordnet ist, wobei jeder Betätigungshebel (122) durch Ausüben von Druck auf seine Lagerzone (128) betätigt wird.

8. Verkleidungsanordnung (300) nach einem der vorstehenden Ansprüche, wobei jeder Betätigungshebel (322) einen Abschnitt (340) zum Aufnehmen einer Windschutzscheibendichtung (10) umfasst.

9. Verkleidungsanordnung (100) nach einem der vorstehenden Ansprüche, wobei jede Verriegelungsvorrichtung ein flexibler Haken (118) ist.

10. Montageteil (104) zum Verbinden eines Armaturenbretts (102) mit einer Karosserie (120) eines Fahrzeugs, wobei das Montageteil (104) eine Vorrichtung (118) zum Verriegeln des Montageteils (104) an einem Armaturenbrett (102) umfasst, wobei die Verriegelungsvorrichtung (118) zwischen einer ersten, verriegelten Position (P1) und einer zweiten, entriegelten Position (P2) bewegbar ist, **dadurch gekennzeichnet, dass** das Montageteil einen Hebel (122) zum Betätigen der Verriegelungsvorrichtung (118) umfasst, wobei der Betätigungshebel (122) es ermöglicht, die Verriegelungsvorrichtung (118) von ihrer ersten in ihre zweite Position zu bewegen.

11. Montageteil (104) nach dem vorstehenden Anspruch, wobei der Betätigungshebel (122) mit einem seiner Enden (124) mit der Verriegelungsvorrichtung (118) verbunden ist, um an der Verriegelungsvorrichtung (118) ziehen zu können.

12. Montageteil (104) nach einem der Ansprüche 10 oder 11, wobei die Verriegelungsvorrichtung ein flexibler Haken (118) ist.

13. Montageteil (104) nach einem der Ansprüche 10 bis 12, wobei der Übergang der Verriegelungsvorrichtung (118) von der ersten in die zweite Position durch Verformung mindestens eines Abschnitts der Verriegelungsvorrichtung (118) bewirkt wird.

14. Montageteil (104) nach einem der Ansprüche 10 bis 13, umfassend Mittel zum Halten der Verriegelungsvorrichtung (118) in der zweiten Position (P2).

15. Montageteil (104) nach dem vorstehenden Anspruch, wobei die Mittel zum Halten in der zweiten Position (P2) eine an dem Montageteil angebrachte Halteöse (132) und eine der Halteöse (132) komplementäre Vertiefung (134) umfassen, wobei die Halteöse (132) mit der Vertiefung (134) in Eingriff steht, um den Betätigungshebel (122) in einer aktiven Position zu halten, wobei eine Öffnung (130) in dem Betätigungshebel ausgebildet ist und die Halteöse (132) mindestens in der zweiten Position (P2) aufnimmt.

## Claims

1. A trim assembly (100) for a vehicle, comprising:
a. a dashboard (102) having a rear transverse edge (106), the edge (106) being intended to be arranged close to the windshield (12) of the vehicle when the trim assembly (100) is mounted therein; and
b. at least one assembly part (104) in engagement with the dashboard (102) for securing the dashboard (102) to the body (120) of the vehicle, each assembly part (104) comprising a device (118) for locking the assembly part (104) to the dashboard (102), the locking device (118) being movable between:
i. a first, locked position (P1), in which the assembly part (104) is immobilized on the dashboard (102), and
ii. a second, unlocked position (P2), in which the assembly part (104) can be removed from the dashboard (102),
**characterized in that** the trim assembly (100) further comprises, for each assembly part (104):
a. a lever (122) for actuating the device (118) for locking the assembly part (104), the actuating lever (122) allowing the locking device (118) to be moved from its first to its second position; and
b. an opening (136) for accessing the actuating lever (122) associated with the assembly part (104), the access opening (136) being located on the edge (106) of the dashboard (102).

2. The trim assembly (200) according to the preceding claim, wherein each actuating lever (222) is arranged on the dashboard (202).

3. The trim assembly (200) according to claim 2, wherein each actuating lever (222) is connected to the dashboard (202) by a joint (223) allowing the actuating lever (222) to be pivoted relative to the dashboard (202).

4. The trim assembly (200) according to any of claims 2 to 3, wherein each actuating lever (222) comprises an actuating zone (225) allowing pressure to be exerted on the locking device (218) associated with the actuating lever (222) in order to bring the locking device (218) into its unlocked position (P2).

5. The trim assembly (100) according to claim 1, wherein each actuating lever (122) is arranged on its associated assembly part (104).

6. The trim assembly (100) according to claim 5, wherein each actuating lever (122) is connected by one of its ends (124) to the device (118) for locking its associated assembly part (104), so as to be able to pull on the associated locking device (118).

7. The trim assembly (100) according to any of the preceding claims, wherein each actuating lever (122) has a bearing zone (128) located at the access opening (136) associated with the actuating lever (122), each actuating lever (122) being operated by exerting pressure on its bearing zone (128).

8. The trim assembly (300) according to any of the preceding claims, wherein each actuating lever (322) comprises a portion (340) for receiving a windshield seal (10).

9. The trim assembly (100) according to any of the preceding claims, wherein each locking device is a flexible hook (118).

10. An assembly part (104) for connecting a dashboard (102) to a body (120) of a vehicle, the assembly part (104) comprising a device (118) for locking the assembly part (104) to a dashboard (102), the locking device (118) being movable between a first, locked position (P1) and a second, unlocked position (P2), **characterized in that** the assembly part comprises a lever (122) for actuating the locking device (118), the actuating lever (122) allowing the locking device (118) to be moved from its first to its second position.

11. The assembly part (104) according to the preceding claim, wherein the actuating lever (122) is connected by one of its ends (124) to the locking device (118), so as to be able to pull on the locking device (118).

12. The assembly part (104) according to any of claims 10 or 11, wherein the locking device is a flexible hook (118).

13. The assembly part (104) according to any of claims 10 to 12, wherein the transition of the locking device (118) from the first to the second position is effected by deformation of at least one portion of the locking device (118).

14. The assembly part (104) according to any of claims 10 to 13, comprising means for holding the locking device (118) in the second position (P2).

15. The assembly part (104) according to the preceding claim, wherein the means for holding in the second position (P2) comprise a holding lug (132) mounted on the assembly part and a depression (134) complementary to the holding lug (132), the holding lug (132) engaging with the depression (134) to hold the actuating lever (122) in an active position, an aperture (130) being formed in the actuating lever and receiving the holding lug (132) at least in the second position (P2).
